# EUROPÄISCHE PATENTSCHRIFT

(11) **EP 1 471 088 B1**
(45) Veröffentlichungstag und Bekanntmachung des Hinweises auf die Patenterteilung: **11.04.2012**
(21) Anmeldenummer: 04008844.5
(22) Anmeldetag: 14.04.2004
(51) Int. Cl.: C08G 18/50, C08G 18/66, C09D 175/08, C09J 175/08

(54) **Polyurethan-Formulierungen und ihre Verwendung**
Polyurethane formulations and their use
Formulations de polyuréthane et leur utilisation

(30) Priorität: 25.04.2003 DE 10318740
(43) Veröffentlichungstag der Anmeldung: 27.10.2004
(73) Patentinhaber: Bayer MaterialScience AG, 51368 Leverkusen (DE)
(72) Erfinder: Knabenreich, Armin Jürgen, 47829 Krefeld (DE); Bulan, Renate, 40764 Langenfeld (DE); Fähling, Friedhelm, 51061 Köln (DE); Mayer, Eduard, Dr., 41539 Dormagen (DE)

(56) Entgegenhaltungen:
- DE-A1- 3 829 290
- GB-A- 2 024 232
- US-A- 3 248 371
- US-B1- 6 368 714

## Beschreibung

Die Erfindung betrifft Polyurethan (PUR-)-Formulierungen auf der Basis von organischen Polyisocyanaten und organischen Polyolverbindungen mit einem verbesserten Verarbeitungsverhalten durch schnellere Verträglichkeit der Rohstoffkomponenten beim Mischvorgang sowie ihre Verwendung zur Herstellung von insbesondere Gussstücken, Einbettmassen, Laminaten und Beschichtungen.

PUR-Formulierungen werden als PUR-Reaktionsharzmassen seit vielen Jahren beispielsweise in der Elektroindustrie verwendet, z.B. als Strukturkomponenten, Vergussmassen für Transformatoren, Unterbrecher, Schalter, Sensoren, Isolatoren oder zum Einkapseln von kleinen elektrischen Bauteilen oder elektronischen Chips.

Die PUR-Reaktionsharzmassen sind üblicherweise 2-Komponentensysteme. Die A-Komponente enthält üblicherweise die Polyisocyanate, die B-Komponente die Polyole und/oder Polyamine und häufig auch die Additive.

Die bewährten PUR-Reaktionsharzmassen zur Herstellung kompakter, blasenfreier PUR-Formteile bestehen vornehmlich aus:
Isocyanaten, vor allem technischem Methandiphenylisocyanat (MDI) bestehend aus einem Isomerengemsich von 4,4'-, 2,4'-, 2,2'-MDI und Anteilen mehrkerniger Polyisocyanate, gelegentlich auch aromatenfreien, (cyclo)-aliphatischen Isocyanaten, wie Isophorondiisocyanat oder hydriertes MDI (H12MDI);
Polyolen, vor allem Polyether- und Polyesterpolyolen, Rizinusöl;
Zusätzen, wie beispielsweise Katalysatoren, Füllstoffen, wie beispielsweise Quarz- und Dolomitmehl, Aluminiumhydroxid, Kreide, Zeolithen, Pigmenten, Flammschutzmitteln, Weichmachern, Extendem und Additiven.

Die Mischung aus der A- und der B-Komponente wird in Formen gegossen und reagiert dann bei Umgebungstemperatur oder erhöhter Temperatur zu einem vemetzten unlöslichen Polyurethanformstoff bzw. Polyurethanformteil.

PUR-Reaktionsharzmassen lassen sich nach den üblichen Methoden der Gießharztechnologie verarbeiten (Kunststoffhandbuch, Band 7 Polyurethane, hrsg. Guenter Oertel, 3. Auflage, 1993, ISBN 3-446-16263-1, S. 438-454).

Bei der Verarbeitung der PUR-Reaktionsharzmassen macht sich eine typische Eigenschaft störend bemerkbar: die mangelnde Verträglichkeit der Isocyanat- und Polyolkomponente. Gegenüber anderen Systemen erfordern beispielsweise nicht katalysierte MDI-Polyetherpolyol-Reaktionsharzmassen eine Rührzeit von einigen Minuten (10 bis 15 Minuten), bis durch die beginnende Urethanbildung eine Verträglichkeit und Homogenität der Ausgangsprodukte erreicht wird; die Mischung wird klar. Bei zu kurzer Rührzeit besteht die Gefahr der Entmischung und damit einer unvollständigen Härtung sowie die Gefahr inhomogener PUR-Formstoffe.

Bei sehr langsam verlaufenden Reaktionen auf der Basis von PUR-Reaktionsharzmischungen, beispielsweise bei der Herstellung von Kabelvergüssen oder Transformatoren, Wandlern oder Isolatorvergüssen, die häufig unkatalysiert und bei Raumtemperatur gestartet ablaufen, macht sich diese Unverträglichkeit besonders unangenehm bemerkbar. Dann kommt es, wie oben erwähnt, bei zu kurzer Rührzeit, wie z. B. in Gießmaschinen mit Statikmischern oder dynamischen Mischern, zur Entmischung und damit zu unvollständiger Härtung bzw. inhomogenen Formstoffen.

Die Unverträglichkeit kann vermieden werden, wenn beispielsweise spezielle MDI-Prepolymere verwendet werden (Franke J.: Kunststoffe 79 (1989) 100, Seite 999). Nachteilig bei diesem Verfahren ist neben der Verminderung der Glasübergangstemperatur, dass durch den Einsatz von Prepolymeren die Anfangsviskosität (Gießviskosität) stark ansteigt und dadurch die Fließfähigkeit vermindert wird. Dies kann zur Folge haben, dass Formen, insbesondere solche mit komplizierten Geometrien nur unzureichend gefüllt werden. Die Fließfähigkeit kann zwar durch geringere Füllstoffzugabe beibehalten werden, im resultierenden Formstoff wirkt sich das jedoch negativ auf andere Eigenschaften aus (beispielsweise wird die Wärmeleitfähigkeit vermindert, Rissanfälligkeit wird höher, die Härte ist geringer usw.).

Weitere Möglichkeiten zur Herbeiführung einer schnellen Verträglichkeit der Ausgangskomponenten sind die Verwendung von Katalysatoren und die Erhöhung der Temperatur sowie die Kombination der beiden Maßnahmen. Beides hat zur Folge, dass die Verarbeitungszeit deutlich vermindert wird.

Eine weitere Möglichkeit zur Verbesserung der Verträglichkeit ist die Verwendung von technischen MDI-Gemischen mit hohen 2,4'- und 4,4'-Isomerenanteilen. Nachteilig sind jedoch die resultierenden verminderten mechanischen und thermischen Werte.

Eine weitere Möglichkeit zur Verbesserung der Verträglichkeit ist die Modifizierung der verwendeten Polyolkomponente durch Epoxide. Der resultierende Formstoff ist sehr hart und spröde (EP-A 148 344). Werden Isolierstoffe hoher Wärmeformbeständigkeit gefordert, ist es erforderlich die Epoxidharzkomponente vollständig zu vernetzen. Dazu erforderliche Nachhärtungstemperaturen oberhalb 120°C führen allerdings oftmals zu Schäden an anderern Isolierstoffen oder elektrischen Komponenten, die im Bauteil verwendet werden. Daher kann man hier nur epoxidfreie Polyurethanreaktionsharzmassen einsetzen.

Es war daher die Aufgabe der vorliegenden Erfindung, PUR-Formulierungen zur Verfügung zu stellen, die beim Mischen der Polyolkomponenten mit den Polyisocyanaten sofort bzw. sehr schnell zu einer Verträglichkeit führen, so dass die Rührzeit verkürzt werden kann, unter gleichzeitiger Beibehaltung einer niedrigen Gießviskosität und einer langen Verarbeitungszeit und ohne die ansonsten guten Eigenschaften der resultierenden PUR-Formstoffe bzw. PUR-Formteile wie beispielsweise hohe Glasübergangstemperaturen, gute thermische Beständigkeit nach DIN IEC 216, geringe Wasseraufnahme, hohe Druckfestigkeit und Stressarmut zu verschlechtern.

Gegenstand der Erfindung sind Polyurethanformulierungen (PUR-Formulierungen) zur Herstellung kompakter, blasenfreier PUR-Formteile und -Formstoffe, die erhältlich sind aus einer Reaktionsmischung, die aus
a) einem oder mehreren organischen Polyisocyanaten,
b1) einem oder mehreren Polyolen mit zahlenmittleren Molekulargewichten von 100 bis 5000 auf Basis eines aromatischen Starters mit mindestens einer NH2-Gruppe und/oder mindestens einer NHR-Gruppe und/oder auf Basis eines aliphatischen Starters mit mindestens einer NH2-Gruppe und/oder mindestens einer NHR-Gruppe, wobei R für eine Alkylgruppe mit 1 bis 8 Kohlenstoffatomen steht,
b2) einem oder mehreren von b1) verschiedenen Polyolen,
c) gegebenenfalls Kettenverlängerem und/oder Vernetzungsmitteln,
d) gegebenenfalls Katalysatoren und
e) gegebenenfalls Hilfs- und/oder Zusatzstoffen
besteht.

Es wurde überraschenderweise gefunden, dass die anteilige oder ausschließliche Verwendung von Polyolen b1), die als Starterkomponente aliphatische oder bevorzugt aromatische Amine aufweisen, beim Mischen mit den Polyolkomponenten b2) und den Polyisocyanaten a) zu einer deutlichen Verbesserung der Lösungsverträglichkeit führt. Je nachdem wie viel man von der Komponente b1) einmischt, wird eine Direktverträglichkeit aller Komponenten a) bis e), sogar bei Raumtemperatur, erreicht, ohne die oben erwähnten Nachteile der Entmischung und der unvollständigen Härtung.

Die mechanischen oder thermischen Eigenschaften der resultierenden Polyurethane auf der Basis einer Polyolmischung, die einen _{"}Verträglichkeitsmacher" b1) enthält, bleiben mehr oder weniger unverändert gegenüber denen eines PUR mit einer Polyolmischung ohne _{"}Verträglichkeitsmacher" b1). Häufig wird das Gesamteigenschaftsbild sogar verbessert. Dies lässt sich insbesondere dadurch leicht erreichen, indem man den auf aromatischen Diaminen gestarteten Polyethern b1) weitere Polyether b2) zumischt, die dann gemeinsam eine der unverträglichen Ausgangspolyolmischung ähnliche OH-Zahl und zahlengemittelte OH-Funktionalität aufweisen.

Ein weiterer Vorteil der erfindungsgemäßen PUR-Formulierungen ist, dass durch die Verwendung der aromatischen und/oder aliphatischen Starter enthaltenden Polyether b1) eine kontinuierliche Herstellung von Formteilen bei niedrigen Temperaturen wesentlich vereinfacht wird, da die Rührzeit bis zur Verträglichkeit wegfällt. Ein einfaches Mischen mittels beispielsweise Statikmischer ist dann ausreichend. Die Nachteile (wie schlechtes handling bedingt durch sehr kurze Topfzeiten, erhöhte Exothermie usw.) durch den Einsatz von Katalysatoren oder die Erhöhung der Temperatur oder die Kombination von beiden Maßnahmen werden vermieden.

Als Komponente a) eignen sich insbesondere aliphatische, heterocyclische und besonders aromatische Di- und /oder Polyisocyanate, wie sie z.B. von W. Siefen in Justus Liebigs Annalen der Chemie, 562, Seiten 75-136 beschrieben werden, beispielsweise solche der Formel Q(NCO)n, in der n = 2-4, vorzugsweise 2-3 und Q einen aromatischen Kohlenwasserstoffrest mit 6 - 20, vorzugsweise 6-13 C-Atomen oder einen aralaliphatischen Kohlenwasserstoffrest mit 8-15, vorzugsweise 8-13 C-Atomen bedeuten. Auch können solche Polyisocyanate, wie sie in DE-A 28 32 253, Seiten 10-11 beschrieben werden, verwendet werden. Besonders bevorzugt werden die technisch leicht zugänglichen Polyisocyanate, z.B. das 2,4- und/oder 2,6- Toluylendiisocyanat sowie beliebige Gemische dieser Isomeren (_{"}TDI"), Diphenylmethandiisocyanate (4,4'- und/oder 2,4'- und/oder 2,2'-Isomere), Polyphenyl-polymethylen-polyisocyanate, wie sie durch Anilin-Formaldehydkondensation und anschließende Phosgenierung hergestellt werden ("rohes MDI") und modifizierte Polyisocyanate, die z.B. Carbodiimidgruppen, Urethangruppen, Allophanatgruppen, Isocyanauratgruppen, Harnstoffgruppen und/oder Biuretgruppen aufweisen, insbesondere solche modifizierten Polyisocyanate, die sich von 2,4-und/oder 2,6-Toluylendiisocyanat oder vom 4,4'- und/oder 2,4'-Diphenylmethandiisocyanat ableiten.

Als Polyolkomponente b1) werden bevorzugt Polyetherpolyole eingesetzt, die mindestens 2 gegenüber Isocyanaten aktive Wasserstoffatome aufweisen, mit einem Molekulargewicht zwischen 100 und 5000, bevorzugt 120-1500, besonders bevorzugt 300-800. Diese werden erhalten durch Polyaddition von Alkylenoxiden, wie beispielsweise Ethylenoxid, Propylenoxid, Butylenoxid, Dodecyloxid oder Styroloxid, vorzugsweise Propylen- und/oder Ethylenoxid, an aromatische Mono-, Di- oder Polyamine, wie Anilin, Phenylendiamine, Toluylendiamine (2,3-Toluylendiamin, 3,4-Toluylendiamin, 2,4-Toluylendiamin, 2,5-Toluylendiamin, 2,6-Toluylendiamin oder Gemische der genannten Isomeren), 2,2'-Diaminodiphenylmethan, 2,4'- Diaminodiphenylmethan, 4,4'- Diaminodiphenylmethan oder Gemische dieser Isomeren sowie an aliphatische Mono-, Di- oder Polyamine, wie Ethylendiamin. Bevorzugt werden solche Polyether, wie sie in DE-A 38 29 290 beschrieben sind, bei denen ein erheblicher Teil der Aminogruppen (4-40 Mol-% ) nur monoalkoxyliert wird, so dass 2-20 % der gegenüber Isocyanaten reaktiven Gruppen als sekundäre Aminogruppen übrig bleiben. Diese Komponenten weisen eine vergleichsweise erniedrigte Viskosität auf, was sich besonders positiv auf die Fließeigenschaften der PUR-Reaktionsharzmasse auswirkt.

Als langkettige Polyole b2) werden Polyetherpolyole, Polyetheresterpolyole und Polyesterpolyole oder auch Rizinusöl eingesetzt. Geeignete organische Polyhydroxylverbindungen b2) sind alle beliebigen, aus der Polyurethanchemie bekannten Verbindungen, die mindestens 2, vorzugsweise 2-8, besonders bevorzugt 2-4 alkoholisch gebundene Hydroxylgruppen aufweisen. Hierzu gehören beispielsweise die bekannten linearen oder verzweigten Polyetherpolyole des Molekulargewichtsbereichs 150-8000, vorzugsweise 150-4000. Geeignete Polyetherpolyole sind die an sich bekannten Alkoxylierungsprodukte geeeigneter Startermoleküle, wie z.B. Wasser, Ethylenglykol, Diethylenglykol, Propylenglykol, Dipropylenglykol, Butandiol, Butendiol, Butindiol, Bisphenol A, Trimethylolpropan, Glycerin, Sorbit, Sucrose oder beliebige Gemische derartiger Startermoleküle unter Verwendung von Ethylenoxid und/oder Propylenoxid als Alkoxylierungsmittel.

Die Polyetherpolyole können nach dem bekannten Verfahren hergestellt werden, beispielsweise durch anionische Polymerisation von Alkylenoxiden in Gegenwart von Alkalihydroxiden oder Alkalialkoholaten als Katalysatoren und unter Zusatz mindestens eines Startermoleküls, das 2 bis 8 reaktive Wasserstoffatome gebunden enthält, oder durch kationische Polymerisation von Alkylenoxiden in Gegenwart von Lewis-Säuren, wie Antimonpentachlorid oder Borfluorid-Etherat. Ebenso möglich ist auch der Einsatz des Doppel-Metall-Cyanid-Verfahrens, das in US-A 5,470,813 und US-A 5,482,908 beschrieben wird.

Geeignete Polyesterpolyole sind beispielsweise solche auf Basis der genannten Alkohole und mehrbasigen Säuren, wie beispielsweise Adipinsäure, Phthalsäure oder Hexahydrophthalsäure oder auch Rizinusöl.

Als Komponente c) geeignete niedermolekulare Polyole, insbesondere mit Molekulargewichten von 62 bis 400 sind beispielsweise Triethylenglykol, Tetraethylenglykol, Glyzerin, Tripropylenglykol oder Tetrapropylenglykol. Ebenfalls geeignet sind Aminoalkohole wie beispielsweise Triethanolamin.

Als Komponente d) werden Katalysatoren wie z.B. tert. Amine, wie Tetraethylendiamin oder Dimethylbenzylamin oder Katalysatoren auf metallorganischer Basis, wie z.B. Zinn(II)-octoat, Dibutylzinndilaurat, oder organische Wismutverbindungen verwendet.

Als Hilfs- und Zusatzstoffe e) werden insbesondere Farbstoffe, Pigmente, Weichmacher, Füllstoffe, wie z.B. Quarzmehl, Aluminiumhydroxide bzw. -oxide, Kreide und Dolomit, Verstärkungsmaterialien wie Glasfasern oder Glaskugeln oder Hohlkugeln, wasseradsorbierende Zusatzmittel, wie z.B. Zeolithe, Flammschutzmittel, wie z.B. die in der Polyurethanchemie für diesen Zweck eingesetzten phosphororganischen Verbindungen, Entschäumer, Verlaufshilfsmittel und Antiabsetzmittel der aus der Lacktechnologie bekannten Art verwendet.

Die gegebenenfalls mitzuverwendenden Hilfs- und Zusatzstoffe werden im Allgemeinen der Polyolkomponente zugemischt, obwohl grundsätzlich auch ihre Abmischung mit der Polyisocyanatkomponente in Betracht kommen kann.

Die Herstellung der Formteile bzw. Formstoffe erfolgt vorzugsweise innerhalb eines Temperaturbereichs von 0 bis 60°C, vorzugsweise von 10 bis 40°C für das Reaktionsharzgemisch und von 0 bis 160°C, bevorzugt 10 bis 120°C für das Werkzeug. Die Durchmischung der Reaktionspartner und der Hilfs- und Zusatzstoffe kann nach den bekannten Methoden des Standes der Technik erfolgen.

Die PUR-Formulierungen werden zur Herstellung von PUR-Formstoffen bzw. PUR-Formteilen eingesetzt. Insbesondere können mit den PUR-Formulierungen Vergussmassen, Gießharzmassen, Beschichtungen oder Verklebungen, bei denen es auf eine schnelle bzw. nahezu augenblickliche Verträglichkeit der Reaktionspartner ankommt, hergestellt werden.

Die Erfindung soll anhand der nachfolgenden Beispiele näher erläutert werden.

### Beispiele

- Polyetherpolyol 1:: Trimethylolpropan und Propylenoxid mit einer Viskosität (25°C) 600 mPas, OHZ von 385
- Polyetherpolyol 2:: 1,2-Propylenglykol und Propylenoxid, Viskosität (25°C) 55 mPas, OHZ 515
- Polyetherpolyol 3:: 1,2-Propylenglykol und Propylenoxid, Viskosität (25°C) 140 mPas, OHZ 112
- Polyetherpolyol4:: o-TDA und Ethylen- und Propylenoxid (34,5:42,9), Viskosität (25°C) 8000 mPas, OHZ 415
- Polyetherpolyol 5:: Glycerin und Propylenoxid, Viskosität (25°C) 400 mPas, OHZ 450
- Polyetherpolyol 6:: Glycerin und Propylenoxid, Viskosität (25°C) 250 mPas, OHZ 250
- Isocyanatgemisch :: 70 Tle. Polyisocyanatgemisch der Diphenylmethanreihe mit einer Viskosität von ca. 190 mPas und einem NCO-Gehalt von 31,4 % und 30 Tle. eines Polyisocyanatgemischs der Diphenylmethanreihe mit einer Viskosität von ca. 19,5 mPas und einem NCO-Gehalt von ca. 32,7 %
- Katalysator 1:: 33 % 1,4-Diazabicyclo[2.2.2.]octane, 67 % Dipropylenglycol (Handelsname 33LV)
- Katalysator 2:: org. Wismutverbindung (Handelsname Coscat 83)

In den nachfolgenden Beispielen beziehen sich alle Angaben in _{"}Teilen" auf Gewichtsteile.

### Beispiel 1 (nicht erfindungsgemäß)

Polyetherpolyol 1 wird 60 Minuten lang bei 80°C und < 6 mbar entgast und entwässert. Danach lässt man das Polyetherpolyol 1 auf Raumtemperatur abkühlen und vermischt 100 Teile des Polyetherpolyols 1 intensiv mit 95,1 Teilen des bei Raumtemperatur und < 6 mbar entgasten Isocyanatgemisches. Es entsteht eine unverträgliche Reaktionsharzmasse, woraus nach 860 s (Rührzeit bis Klarpunkt) eine klare, verträgliche, niedrigviskose Reaktionsharzmischung entsteht. Diese Reaktionsharzmischung wird in eine mit Trennmittel präparierte Form gefüllt und bei Raumtemperatur ca. 16 h gehärtet. Danach wird der erhaltene Formstoff weitere 12 h bei 80°C ausgehärtet (getempert).

Die Reaktionsharzmischung hat eine Topfzeit von 2800 s.

Das erhaltene Formstoff hat eine Glasübergangstemperatur von 97-98°C

### Beispiel 2 (erfindungsgemäß)

70,0 Tle. Polyetherpolyol 1, 6,4 Tle. Polyetherpolyol 2, 5,1 Tle. Polyetherpolyol 3 und 18,5 Tle. Polyetherpolyol 4 werden gemischt und eine Stunde bei 80°C und < 6 mbar entgast und entwässert. (Die Polyetherpolyolmischung hat eine OH-Zahl von 385 und eine zahlengemittelte Starterfunktionalität von 3. Dies entspricht den Werten aus Beispiel 1). Danach lässt man die Polyetherpolyolmischung auf Raumtemperatur abkühlen und vermischt intensiv mit 95,1 Teilen des bei Raumtemperatur und < 6 mbar entgasten Isocyanatgemisches. Es entsteht nach einer Rührzeit von 100 s eine verträgliche, niedrigviskose Reaktionsharzmischung. Diese Reaktionsharzmischung wird in eine mit Trennmittel präparierte Form gefüllt und bei Raumtemperatur ca. 16 h gehärtet. Danach wird der erhaltene Formstoff weitere 12 h bei 80°C ausgehärtet.

Die Reaktionsharzmischung hat eine Topfzeit von 2016 s.

Der erhaltene Formstoff hat eine Glasübergangstemperatur von 116-118°C

### Beispiel 3 (nicht erfindungsgemäß)

100 Tle. des Polyetherpolyol 5 werden 60 Minuten lang bei 80°C und < 6 mbar entgast und entwässert. Danach lässt man das Polyetherpolyol 5 auf Raumtemperatur abkühlen und vermischt intensiv mit 118 Teilen des bei Raumtemperatur und < 6 mbar entgasten Isocyanatgemischs. Es entsteht eine unverträgliche Reaktionsharzmischung, woraus nach 930 s (Rührzeit bis Klarpunkt) eine klare, verträgliche, niedrigviskose Reaktionsharzmischung entsteht. Diese Reaktionsharzmischung wird in eine mit Trennmittel präparierte Form gefüllt und bei Raumtemperatur ca. 16 h gehärtet. Danach wird der erhaltene Formstoff weitere 12 h bei 80°C ausgehärtet.

Die Reaktionsharzmischung hat eine Topfzeit von 3900 s.

Der erhaltene Formstoff hat eine Glasübergangstemperatur von 105-110°C.

### Beispiel 4 (erfindungsgemäß)

70 Tle. Polyetherpolyol 5, 21,6 Tle. Polyetherpolyol 4, 8,1 Tle. Tripropylenglykol und 0,3 Tle. Polyetherpolyol 6 werden gemischt und eine Stunde bei 80°C und < 6 mbar entgast und entwässert. Danach lässt man die Polyetherpolyolmischung auf Raumtemperatur abkühlen und vermischt intensiv mit 118 Teilen des bei Raumtemperatur und < 6 mbar entgasten Isocyanatgemischs. Es entsteht nach einer Rührzeit von 65 s eine verträgliche, niedrigviskose Reaktionsharzmischung. Diese Reaktionsharzmischung wird in eine mit Trennmittel präparierte Form gefüllt und bei Raumtemperatur ca. 16 h gehärtet. Danach wird der erhaltene Formstoff weitere 12 h bei 80°C ausgehärtet.

Die Reaktionsharzmischung hat eine Topfzeit von 2040 s.

Der erhaltene Formstoff hat eine Glasübergangstemperatur von 116°C.

### Beispiel 5 (nicht erfindungsgemäß)

100 Tle. des Polyetherpolyols 1 und 0,5 Tle. des Katalysators 1 werden 60 Minuten lang bei 80°C und < 6 mbar entgast und entwässert. Danach lässt man das Gemisch auf Raumtemperatur abkühlen und vermischt intensiv mit 95,1 Teilen des bei Raumtemperatur und < 6 mbar entgasten Isocyanatgemischs. Es entsteht eine unverträgliche Reaktionsharzmischung, woraus nach 110s (Rührzeit bis Klarpunkt) eine klare, verträgliche, niedrigviskose Reaktionsharzmischung entsteht. Diese Reaktionsharzmischung wird in eine mit Trennmittel präparierte Form gefüllt und bei Raumtemperatur ca. 16 h gehärtet. Danach wird der erhaltene Formstoff weitere 12 h bei 80°C ausgehärtet.

Die Reaktionsharzmischung hat eine Topfzeit von 360 s.

Der erhaltene Formstoff hat eine Glasübergangstemperatur von 99-101°C.

### Beispiel 6 (nicht erfindungsgemäß)

100 Tle. des Polyetherpolyols 1 und 0,25 Tle. des Katalysators 2 werden 60 Minuten lang bei 80°C und < 6 mbar entgast und entwässert. Danach lässt man das Gemisch auf Raumtemperatur abkühlen und vermischt intensiv mit 95,1 Teilen des bei Raumtemperatur und < 6 mbar entgasten Isocyanatgemischs. Es entsteht eine unverträgliche Reaktionsharzmischung, woraus nach 70 s (Rührzeit bis Klarpunkt) eine klare, verträgliche, niedrigviskose Reaktionsharzmischung entsteht. Diese Reaktionsharzmischung wird in eine mit Trennmittel präparierte Form gefüllt und bei Raumtemperatur ca. 16 h gehärtet. Danach wird der erhaltene Formstoff weitere 12 h bei 80°C ausgehärtet.

Die Reaktionsharzmischung hat eine Topfzeit von 300 s.

Der erhaltene Formstoff hat eine Glasübergangstemperatur von 98-100°C.

### Definitionen:

### Klarpunktzeit (KPZ; [sec]):

Die Zeit, die erforderlich ist, um unter Rühren die Reaktionsharzkomponenten von einer trüben Emulsion in eine klare homogene Mischung zu überführen.

### Topfzeit (TZ; [sec]):

Die Zeit beginnend mit dem Mischen der Reaktionsharzkomponenten bis zum Erreichen der maximalen Verarbeitungsviskosität.

### Verarbeitungszeit (VZ; [sec]):

Die Zeit zwischen Eintreten des Klarpunktes und der für die Verarbeitung (Gießprozess) maximal möglichen Viskosität der Reaktionsharzmischung.

### Bestimmungsmethode für VZ, TZ und KPZ:

In einem 250 ml Polyethylenbecher werden die Polyol- und Isocyanatkomponenten bei etwa 23°C im erforderlichen Mischungsverhältnis in einer Gesamtmenge von etwa 200 g eingefüllt. Die beiden Komponenten werden mittels eines Rührstabes miteinander vermischt und so lange umgerührt, bis eine klare homogene Mischung entsteht. Danach wird so lange der Viskositätsaufbau beurteilt, bis ein deutlich sichtbarer Übergang von einer hochviskosen Flüssigkeit zu einem Gel eintritt. Mit Beginn des Vermischens der Komponenten wird die Zeitmessung gestartet. Die Zeit vom Beginn des Mischvorganges bis zum Übergang von einer trüben Emulsion bis zu einer klaren homogenen Mischung ist die KPZ.

Die Zeit vom Beginn des Mischvorganges bis zum Übergang der Flüssigkeit in ein Gel ist die TZ.

Aus Topfzeit abzüglich der Klarpunktzeit resultiert die maximal verfügbare Verarbeitungszeit (TZ - KPZ = VZ).

### Glaspunkt (Tg; [°C]):

Die Bestimmung des Glaspunktes erfolgte mittels der Differential-Scanning-Analyse (DSC) gemäß DIN 53 765.

**Tabelle: KPZ, TZ und Tg**

| | **Rührzeit bis Klarpunkt** | **Topfzeit** | **Glasübergangstemperatur** |
|---|---|---|---|
| Beispiel 1 | 860 sec | 2800 sec | 97-98°C |
| 2* | 100 sec | 2016 sec | 116-118°C |
| 3 | 930 sec | 3900 sec | 105-110°C |
| 4* | 65 sec | 2040 sec | 116°C |
| 5 | 110 sec | 360 sec | 99-101°C |
| 6 | 70 sec | 300 sec | 98-100°C |

| | | | |
|---|---|---|---|
| * erfindungsgemäß | | | |

## Patentansprüche

1. Polyurethanformulierungen zur Herstellung kompakter, blasenfreier PUR-Formteile und - Formstoffe, die aus einer Reaktionsmischung erhältlich sind, die aus
a) einem oder mehreren organischen Polyisocyanaten
b1) einem oder mehreren Polyolen mit zahlenmittleren Molekulargewichten von 100 bis 5000 auf Basis eines aromatischen Starters mit mindestens einer NH2-Gruppe und/oder mindestens einer NHR-Gruppe wobei R für eine Alkylgruppe mit 1 bis 8 Kohlenstoffatomen steht,
b2) einem oder mehreren von b1) verschiedenen Polyolen aus der Gruppe bestehend aus Polyetherpolyolen, Polyetheresterpolyolen, Polyesterpolyolen mit 2 bis 8 alkoholisch gebundenen Hydroxylgruppen und Rizinusöl,
c) gegebenenfalls Kettenverlängerem und/oder Vernetzungsmitteln aus der Gruppe bestehend aus niedermolekularen Polyolen mit Molekulargewichten von 62 bis 400,
d) gegebenenfalls Katalysatoren und
e) gegebenenfalls Hilfs- und/oder Zusatzstoffen aus der Gruppe bestehend aus Farbstoffen, Pigmenten, Weichmachern, Füllstoffen, Verstärkungsmaterialien, wasserabsorbierenden Zusatzmitteln, Flammschutzmitteln, Entschäumern, Verlaufshilfsmitteln und Antiabsetzmitteln
besteht.

2. Verwendung der PUR-Formulierung gemäß Anspruch 1 zur Herstellung von Vergussmassen, Gießharzmassen, Beschichtungen, Verklebungen, Laminaten und Einbettmassen.

## Claims

1. Polyurethane formulations for producing compact, bubble-free PU materials and compact, bubble-free PU mouldings, both of which are attainable from a reaction mixture which is composed of
a) one or more organic polyisocyanates
b1) one or more polyols with number-average molecular weights of from 100 to 5000 based on an aromatic starter having at least one NH₂ group and/or at least one NHR group, where R is an alkyl group having from 1 to 8 carbon atoms,
b2) one or more polyols which differ from b1) and come from the group consisting of polyether polyols, polyether ester polyols, polyester polyols having from 2 to 8 alcoholic hydroxy groups and castor oil,
c) optionally chain extenders and/or crosslinking agents from the group consisting of low-molecular-weight polyols with molecular weights of from 62 to 400,
d) optionally catalysts and
e) optionally auxiliaries and/or additives from the group consisting of dyes, pigments, plasticizers, fillers, reinforcing materials, water-absorbent additions, flame retardants, antifoams, levelling agents and antisettling agents.

2. Use of the PU formulation according to Claim 1 for producing potting compositions, casting compositions, coatings, adhesives, laminates and embedding compositions.

## Revendications

1. Formulations de polyuréthane pour la fabrication de matériaux de moulage et de pièces moulées en PUR compacts et sans bulles, qui peuvent être obtenues à partir de
a) un ou plusieurs polyisocyanates organiques,
b1) un ou plusieurs polyols ayant des poids moléculaires moyens en nombre de 100 à 5 000 à base d'un démarreur aromatique comprenant au moins un groupe NH₂ et/ou au moins un groupe NHR, R représentant un groupe alkyle de 1 à 8 atomes de carbone,
b2) un ou plusieurs polyols différents de b1) du groupe constitué par les polyétherpolyols, les polyétheresterpolyols, les polyesterpolyols comprenant 2 à 8 groupes hydroxyle reliés alcooliquement et l'huile de ricin,
c) éventuellement des allongeurs de chaîne et/ou des agents de réticulation du groupe constitué par les polyols de faible poids moléculaire ayant des poids moléculaires de 62 à 400,
d) éventuellement des catalyseurs et
e) éventuellement des adjuvants et/ou additifs du groupe constitué par les colorants, les pigments, les plastifiants, les charges, les matériaux renforçants, les additifs absorbant l'eau, les agents ignifuges, les agents antimousses, les adjuvants d'écoulement et les agents de suspension.

2. Utilisation de la formulation de PUR selon la revendication 1 pour la fabrication de matériaux de coulage, de matériaux de résine de coulage, de revêtements, d'encollages, de stratifiés et de matériaux d'encastrage.
